# EUROPEAN PATENT SPECIFICATION

(11) **EP 3 383 196 B1**
(45) Date of publication and mention of the grant of the patent: **25.03.2020**
(21) Application number: 16794656.5
(22) Date of filing: 14.11.2016
(51) Int. Cl.: A23G 9/32, A23G 9/42

(54) **NON-DAIRY FROZEN CONFECTION WITHOUT STABILIZERS**
MILCHFREIES GEFRORENES KONFEKT OHNE STABILISATOREN
CONFISERIE CONGELÉE NON-LAITIÈRE SANS AGENT STABILISANT

(30) Priority: 04.12.2015 US 201562263000 P
(43) Date of publication of application: 10.10.2018
(73) Proprietor: Société des Produits Nestlé S.A., 1800 Vevey (CH)
(72) Inventor: DESAI, Nilesh, Bakersfield, California 93312 (US); MARK, Stephen, Bakersfield, California 93311 (US); MATTIUSSI, Justine, Bakersfield,California 93313 (US)
(74) Representative: Elleby, Gudrun
(86) International application number: PCT/EP2016/077586
(87) International publication number: WO 2017/093005

(56) References cited:
- EP-A1- 1 891 863
- EP-A1- 2 060 188
- WO-A1-2009/067069
- WO-A1-2012/130654
- GB-A- 2 472 471
- IL-A- 172 322
- US-A- 4 335 155
- US-A- 4 368 211
- US-A- 4 643 906
- US-A- 5 989 598
- US-A1- 2010 119 683
- US-A1- 2013 259 975

## Description

### Field of Invention

The present invention relates to a non-dairy frozen confection and a process of making it. In particular the invention relates to a coconut cream based frozen confection.

### Background of Invention

Frozen confections which have a smooth and creamy texture are highly appreciated by consumers. This also applies to the category of non-dairy frozen confection. Conventional ice creams are made from a combination of milk products, including cream, butter, butterfat, or milk in one of its various forms: whole fluid milk, evaporated milk, skim milk, condensed milk, sweetened dried milk, or dried skim milk. These milk products, for the most part, contain various concentrations of lactose and cannot be digested by lactase deficient persons or by consumers who wish to avoid dairy products for other reasons.

Typically milk proteins and fats in dairy based frozen confection help create smooth and creamy texture of frozen confection. This is particular the case for a super-premium product, where high amount of protein and fats are used. In the absence of dairy ingredients there is a critical need to use added stabilizers and emulsifiers to deliver on a smooth and creamy texture. Normally stabilizers are gums from various sources and emulsifiers are mono and di-glycerides, egg yolks, lecithin etc.

US 2010119683 discloses a process for preparing a frozen dessert for soft serve-ice cream having stabilized ice crystals to imitate the taste of ice cream. The process comprises selection of ingredient from a group including coconut milk and coconut meat, to which both a freeze inhibitor and a stabilizer are added.

US 4643906 discloses a non-dairy milk and cream substitutes which comprise a water and oil emulsion. The non-dairy emulsion consists of a homogenized blend of vegetable, emulsifier, stabilizer, protein, and water. The vegetable oil may be coconut oil.

GB2472471 discloses a frozen dessert comprises brown rice milk, preferably between 75-85% brown rice milk, most preferably between 78-79% brown rice milk, said brown rice milk comprising 6% brown rice flour and 94% water. The dessert may also comprise varying combinations of fruit sugars, manuka honey, Echinacea, lecithin and vegetable oils. The vegetable oil is preferably coconut oil. The frozen dessert provides a lactose free alternative to dairy ice cream and has good organoleptic characteristics. The use of brown rice milk provides vitamins and minerals found in the rice bran.

US4335155 discloses non-dairy dessert compositions suitable for the preparation of aerated frozen desserts by either commercial agitated freezing or by at-home static freezing. The compositions comprise from about 35% by weight to about 80% of a specially prepared cooked fruit base, from about 0.3% to 1.5% by weight of an acid-stable whipping agent, from about 0.05% to 0.5% by weight of an acid-stable polysaccharide gum, from about 1% to about 15% of a maltodextrin bodying agent, and from about 1% to 10% of an edible fatty triglyceride oil. The moisture content of the dessert compositions ranges between about 45% to 75%.

Currently no frozen non-dairy frozen confection is available in the market that delivers smooth and creamy texture without incorporating the stabilizers or emulsifiers mentioned. There is a need to provide a frozen confection being non-dairy and without stabilizers which overcome the aforementioned drawbacks.

### Object of the invention

It is thus an object of the present invention to provide a non-dairy frozen confection which is creamy and smooth in texture like a dairy frozen confection while being free from stabilizers.

### Summary of the invention

It was surprisingly found that a specific balance between coconut cream with a certain fat and solids content, non-fat solids in particular sugar and glucose syrup, and cocoa powder provides a product with the desired characteristics. These characteristics include a desirable bland coconut flavor, balanced level of sweetness, smoothness, chewiness and creamy mouth feel. This solution provides a clean label product with few ingredients.

In a first aspect, the present invention relates to a non-dairy frozen confection comprising
30 to 60 wt. % of coconut cream based on the total weight of the frozen confection, 20 to 30 wt. % of the coconut cream being fat and the coconut cream having a total solid content of 25 to 40%,
15 to 40 wt. % non-fat solids and
water, and
being free from stabilizers or comprises as the only stabilizer fruit or vegetable based stabilizer or a combination thereof, and wherein the non-fat solids comprises non-fat solids selected from the group consisting of sucrose or sugar, glucose, fructose, maltose, glucose syrup, fibres, protein or combination thereof.

This means that the non-dairy frozen confection according to the invention is free from marine, cellulose, resin based, seed based, chemical and fermented stabilizers.

The non-fat solids comprises non-fat solids selected from the group consisting of sucrose or sugar, glucose, fructose, maltose, glucose syrup, fibres, protein or combinations thereof. The non-fat solids are preferably non-fat solids from sweeteners, cocoa-derived ingredients and coconut. The cocoa-derived ingredients are preferably cocoa powder.

In a second aspect, the invention relates to a process for making a non-dairy frozen confection.

### Detailed Description

The present invention is defined by the claims. It has been found that with a combination of the claimed ingredients a surprisingly creamy product is obtained. As discussed in the introduction it is known in the prior art to make non-dairy product with stabilizers and emulsifiers as alternative to conventional dairy frozen confection such as ice cream. It is therefore indeed surprising that a product which can be made with few ingredients combined with processing steps provides superior textures and taste. Additionally, it has been found that throughout shelf-life the quality remains similar to frozen dairy confection products that contain stabilizers and emulsifiers.

Further in the present context unless otherwise indicated % of a component means the % of weight based on the weight of the composition, i.e. weight/weight %.

For the texture and mouthfeel of the frozen confection according to invention, the coconut cream is essential. According to the invention 30 to 60 wt. % of coconut cream based on the total weight of the frozen confection should be used. The fat content of the coconut cream is 20 to 30% and the total solid content of the coconut cream 25 to 40%. It is preferred that a frozen confection made from a coconut cream has a fat content from 24 to 30 wt. %.

In the present context coconut cream comprise fat and other components from coconut in a liquid or semi solid form. This is different from coconut oil, where the oil is extracted. There is no distinction made between coconut cream and coconut milk but depending on the amount of fat in the product the coconut may be more creamy or milky. The coconut cream can be combination of different fractions of coconut. The unique characteristics described of the final product can be obtained regardless of the combination of separated or partial coconut cream fractions.

Further in the present context a non-dairy frozen confection is substantially free of dairy ingredients. The term "substantially free" means that these dairy materials are not intentionally added for their conventional property imparting abilities, although there could be unintended minor amounts present without detracting from the performance of the products. Generally and preferably, the products of the invention will not contain any dairy materials. By the term "free" is therefore meant that any dairy products comprise 0.5 % by weight or less of a dairy derived material.

The non-dairy frozen confection comprises from 17 to 37 wt. % sweetener solids. The sweetener solids are preferably selected from the group consisting of sucrose or sugar, glucose, fructose, maltose, glucose syrup, or combinations thereof.

In a preferred embodiment the sweetener comprise of 1 to 40 wt. % of glucose syrup and 5 to 20 wt. % of sugar. More preferably the glucose syrup is present in an amount of 20 to 30 wt. %. This provides a good flavour, texture, and shelf life to the product. If higher amounts of glucose syrup is used the product becomes too soft, if less is used then the product is hard and difficult to scoop. The sugar provides a bulking effect, sweetness, the appropriate freezing point depression and texture to the product.

In the present context the term "sugars" in this document will be defined as a mixture of mono- and di- saccharides. For example, sucrose, glucose, fructose, maltose are sugars according to this definition. Moreover, the term "sugar" will be defined as dry sucrose, or common sugar, or crystallized sugar.

In the present context, glucose syrup is any liquid starch hydrolysate of mono-, di-, and higher-saccharides and can be made from any source of starch; wheat, tapioca and potatoes are the most common other sources. In accordance with present invention, preferred glucose syrup is corn syrup made from starch of maize. The corn syrup prevents crystallization of sugar and enhances flavour, texture, and shelf life of the product.

In accordance with the invention water is part of the frozen composition formulation. The water may be part of a sweetener solution or may be added directly to the other ingredients of the frozen confection.

A preferred glucose syrup is corn syrup, preferable a corn syrup within the range of 24DE to 42DE or a combination of such corn syrups, more preferably a corn syrup with 26DE. It has been found that this kind of corn syrups provides more bulking capacity for a given sweetness.

Advantageously, the non-dairy frozen confection has a total solid content of 25 to 50 % based on the weight of the total frozen composition, more preferably a total solids content of 35-45%. These ranges were seen to deliver the most optimal texture. Outside these range the texture and taste would be negatively impacted.

The non-dairy frozen confection may contain a fruit or vegetable stabilizer or a combination thereof. If it does it is preferred that it is in an amount of up to 0.5 wt. %.

In one embodiment of the invention the fruit or vegetable based stabilizer is pectin. Pectin is a structural heteropolysaccharide contained in the primary cell walls of terrestrial plants. It is produced commercially as a white to light brown powder, mainly extracted from citrus fruits.

In a preferred embodiment of the present invention the composition does not contain any stabilizers. In a particular preferred embodiment of the invention the frozen confection comprises cocoa-derived ingredient and is free from vegetable based stabilizer. Advantageously, the cocoa-derived ingredients is cocoa powder.

A super-premium frozen confection textural quality can be obtained when the non-dairy frozen confection has an overrun of 22 to 50%, preferably 25 to 40%.

The total solids content of the product is important to obtain the desired mouthfeel, melt, shelf stability, appearance and flavour. The best quality product is obtained with a coconut cream having a total solid content of 28 to 32 %. Furthermore advantageously, the frozen confection comprises 0.1 to 2.0% wt. protein. This provides air bubble stability and leads to better product shelf-stability and provides flavor and texture.

It has surprisingly been found that even with this low protein concentration (and no dairy protein) it has been possible to create and stabilize the product overrun and generating the indulgent texture in the absence of traditional stabilizers.

Advantageously, in one embodiment of the invention 0.3 wt. % of protein comes from coconut cream. In the present context protein coming from inclusion and nuts are not contributing to the product texture and not considered for the calculation of the protein content of the claimed invention.

In a particular desirable embodiment of the invention the non-dairy frozen confection consists of coconut cream, glucose syrup, sugar, pectin or cocoa powder and water.

The invention also relates to a process of making a non-dairy frozen confection according to the invention as described above. The process comprised the following steps:
blending the coconut cream, sweeteners, cocoa-derived ingredients with water in a tank to obtain a non-dairy blend,
heat treating blend to destroy pathogens and melt the fat
homogenize blend to breakdown and stabilize fat globules,
cooling blend to solidify fat and thickening the blend,
optionally flavoring the blend to suit taste
freezing while incorporating air,
packaging the frozen blend, and
hardening the product in a freezer.

### EXAMPLES

By way of example and not limitation, the following examples are illustrative of various embodiments of the present disclosure.

### Example 1

**Table 1 shows a range of ingredients for an acceptable coconut based non-dairy frozen confection**

| **Ingredient** | **% by weight** |
|---|---|
| Coconut Cream | 40 - 48 |
| Sugar | 4 - 20 |
| Corn Syrup | 5 - 30 |
| Pectin | 0.1 - 0.3 |
| Water | Remainder |
| Total input ingredients | 100.0 |

**Table 2 shows a range of ingredients for a non-acceptable coconut based non-dairy frozen confection. The reason for the non-acceptance is due the imbalance in sweetener content. In this example, the product has an undesirable soft texture that leads to gummy texture, large ice crystals, and undesirable cold sensory attributes. It has been found that the recipe is too low in non-fat solids.**

| **Ingredient** | **% by weight** |
|---|---|
| Coconut Cream | 42 |
| Sugar | 9 |
| Corn Syrup | 0 |
| Cocoa | 3 |
| Water | remainder |
| Total input ingredients | 100.0 |

**Table 3 shows a range of ingredients for a non-acceptable coconut based non-dairy frozen confection. In this example the level of combined sweeteners does not provide an adequate level of sweet taste in the finished product and has too low non-fat solids.**

| **Ingredient** | **% by weight** |
|---|---|
| Coconut Cream | 30 |
| Sugar | 4 |
| Corn Syrup | 6 |
| Cocoa | 3 |
| Water | remainder |
| Total input ingredients | 100.0 |

### Experimental part

### I- Materials & methods

### Ingredients

All the ingredients are commercially available and were used as powders and liquids. More specifically:
Coconut Cream in the form of a liquid emulsion
Corn or beet sugar as powder or liquid solution
Corn syrup in the form of liquid solution
Pectin powder
Cocoa powder

All % disclosed are weight %.

### Frozen confection preparation

I- All ingredients are weighed or measured out to meet formula requirements
II- All ingredients are combined in an high shear industrial blender (e.g. Breddo liquefier) to achieve liquid homogeneity
III- Liquid is high temperature short time pasteurized according to local, state, and federal requirements
IV- Liquid is homogenized to create a fat and aqueous phase stable emulsion
V- Liquid is chilled to refrigerated temperatures according to local, state, and federal requirements
VI- Liquid (flavored or unflavored) is frozen through an industrial ice cream freezer to create a frozen confection.
VII- Frozen confection is filled into primary packaging and sealed
VIII- Packaged frozen confection is blast frozen for rapid water freezing
IX- Packaged frozen confection is stored in frozen condition for distribution and consumption.

### Example 2

### Evaluation

Sensory blind tests are carried out on frozen confection samples at -10°C.

### Comparative tests design

### Objective

- Assess performance of each of three test Non-Dairy prototypes versus current in-market products.
- Assess appeal of the flavors tested relative to each other (based on first position ratings).

### Action Standard

- Win = Overall Linking score statistically higher with 80% or 90% confidence level
- Parity = Score that is neither statistically higher or lower with the 80% or 90% confidence level
- Loss = Score that is statistically lower with 80% or 90% confidence level

### Ingredients

### Test Chocolate

Coconut cream (40 - 45 wt. % with 20 -25 wt. % fat), corn syrup, sugar, water, cocoa processed with alkali
Base formulation: (fat 10 - 13 wt. %, non-fat solids 35 -38 wt. % and no stabilizers)

### Test Chocolate Salted Fudge

Coconut cream(40 - 45 wt. % with 20 -25 wt. % fat), corn syrup, sugar, water, cocoa processed with alkali, corn starch, soybean oil, coconut oil, Chocolate liquor, cocoa, vanilla extract, sea salt
Base formulation: (fat 10 - 13 wt. %, non- fat solids 35 - 38 wt. % and no stabilizers)

### Test Tropical

Coconut cream (40 - 45 wt. % with 20 - 25 wt. % fat), water, corn syrup, sugar, pineapple, papaya puree, guava puree, mango, pectin, lemon juice concentrate.
Base formulation: (fat 8 - 12 wt. %, non-fat solids 33 - 37 wt.%)

### Commercially available Chocolate frozen confection

Organic Coconut milk (water, organic coconut milk), organic dried cane syrup, inulin, cocoa processed with alkali, **carob bean gum**, **guar gum**, natural flavor (contains seed-based stabilizers)

### Commercially available Caramel & Chocolate

Organic Coconut milk (organic coconut, water, **organic guar gum**), organic agave syrup, organic caramel (organic coconut sugar, organic coconut milk, water, sea salt, **organic guar gum**), organic dark chocolate flakes (organic Fair Trade dark chocolate [organic Fair Trade cocoa liquor, organic Fair Trade cane sugar, organic Fair Trade cocoa butter, organic Fair Trade cocoa powder], organic coconut oil), organic coconut cream, sea salt (contains seed-based stabilizers)

### Commercially available Pineapple Coconut

Organic coconut milk (organic coconut, water, **organic guar gum**), organic agave syrup, organic pineapple, organic pineapple juice concentrate, organic coconut cream, organic coconut extract, organic rum extract (contains seed-based stabilizers).

### Testing

Products were made according to the invention. The comparative testing was done with 75 - 83 consumers per test.

The origin of the products were not disclosed. The following tests were done:
- Test Chocolate vs. commercially available Chocolate
- Test Chocolate Salted Fudge vs. commercially available Salted Caramel and Chocolate
- Test Tropical vs. commercially available Pineapple Coconut

### Results

### Chocolate

- Test Chocolate according to the invention is liked significantly better than commercially available. In addition, 7 of 10 preferred test product.
- Overall Liking Score: 6.24 vs. 5.48 (7 point hedonic scale) (7 = Like Extremely, 1 = Dislike Extremely)
- Attributes that were tested were Appearance (6.27 v/s 5.5), Overall Flavor (6.25 v/s 5.44, Overall Texture (6.07 v/s 4.85), After taste (5.93 v/s 5.11), Mouth Coating (5.61 v/s 4.97)

### Chocolate Salted Fudge

- Test chocolate according to the invention Salted Fudge is liked significantly better than commercially available Salted Caramel & Chocolate. In addition, 3 of 4 preferred test product.
- Overall Liking Score: 6.28 vs. 5.29 (7 point hedonic scale) (7 = Like Extremely, 1 = Dislike Extremely)
- Attributes that were tested were Appearance (6.29 v/s 6.04), Overall Flavor (6.17 v/s 5.17), Overall Texture (6.09 v/s 5.63), After taste (5.80 v/s 4.98), Mouth Coating (5.46 v/s 4.39)

### Tropical

- Test Tropical according to the invention is liked significantly better than commercially availabe Pineapple Coconut. In addition, 7 of 10 preferred test product.
- Overall Liking Score: 6.06 vs. 5.41 (7 point hedonic scale) (7 = Like Extremely, 1 = Dislike Extremely)
- Attributes that were tested were Appearance (6.05 v/s 5.59), Overall Flavor (6.06 v/s 5.3), Overall Texture (5.86 v/s 5.39), After taste (6.24 v/s 5.17), Mouth Coating (5.82 v/s 4.91)

### Conclusion

Product prepared according to the invention results in a creamy, smooth textured frozen non-dairy confection that has higher acceptability scores than the commercial available products.

## Claims

1. A non-dairy frozen confection comprising
30 to 60 wt. % of coconut cream based on the total weight of the frozen confection, 20 to 30 wt. % of the coconut cream being fat and the coconut cream having a total solid content of 25 to 40%,
15 to 40 wt. % non-fat solids and
water, and
being free from stabilizers or comprises as the only stabilizer fruit or vegetable based stabilizer or a combination thereof, and wherein the non-fat solids comprises non-fat solids selected from the group consisting of sucrose or sugar, glucose, fructose, maltose, glucose syrup, fibres, protein or combinations thereof.

2. A non-dairy frozen confection according to claim 1, wherein part of the non-fat solids are 1 to 40 wt. % of glucose syrup and 5 to 20 wt. % of sugar.

3. A non-dairy frozen confection according to claim 2, wherein the glucose syrup is present in an amount of 20 to 30 wt. %.

4. A non-dairy frozen confection according to any of the preceding claims, wherein the frozen confection has a solid content of 25 to 50 % based on the weight of the total frozen composition.

5. A non-dairy frozen confection according to any of the preceding claims, wherein the fruit or vegetable stabilizer is preferably present in an amount of 0 to 0.5 wt. %.

6. A non-dairy frozen confection according to any of the preceding claims, wherein the fruit or vegetable stabilizer is pectin.

7. A non-dairy frozen confection according to any of claims 1 to 5, wherein the frozen confection comprises cocoa-derived ingredients and is free from vegetable based stabilizer.

8. A non-dairy frozen confection according to any of the preceding claims, wherein the glucose syrup is corn syrup, preferable a corn syrup with within the range of 24DE to 42DE or a combination of such corn syrups, more preferably a corn syrup with 26DE.

9. A non-dairy frozen confection according to any of the preceding claims, having an overrun is 22 to 50%, preferably 25 to 40%.

10. A non-dairy frozen confection according to any of the preceding claims, wherein the coconut cream has a fat content from 20 to 30 wt. %.

11. A non-dairy frozen confection according to any of the preceding claims, wherein the coconut cream has a total solid content of 28 to 32 %.

12. A non-dairy frozen confection according to any of the preceding claims, wherein the frozen confection consists of coconut cream, glucose syrup, sugar, pectin and water.

13. A non-dairy frozen confection according to claims 1 to 11, wherein the frozen confection consists of coconut cream, glucose syrup, sugar cocoa powder and water.

14. A non-dairy frozen confection according to any of the preceding claims, wherein the frozen confection comprises 0.1 and 2.0 % wt. protein.

15. Process of making a non-dairy frozen confection according to any of the preceding claims, comprising the following steps:
blending the coconut cream, sweeteners, cocoa derived ingredients with water in a tank to obtain a non-dairy blend,
heat treating blend to destroy pathogens and melt the fat
homogenize blend to breakdown and stabilize fat globules,
cooling blend to solidify fat and thickening the blend,
optionally flavoring the blend to suit taste
freezing while incorporating air,
packaging the frozen blend, and
hardening the product in a freezer.

## Patentansprüche

1. Milchfreies gefrorenes Konfekt, umfassend
zu 30 bis 60 Gew.-% Kokoscreme, bezogen auf das Gesamtgewicht des gefrorenen Konfekts, wobei zu 20 bis 30 Gew.-% der Kokoscreme Fett sind und die Kokoscreme einen Gesamtfeststoffgehalt von 25 bis 40 % aufweist, zu 15 bis 40 Gew.-% fettfreie Feststoffe, und Wasser, und
wobei das Konfekt frei von Stabilisatoren ist oder als einzigen Stabilisator einen Stabilisator auf Frucht- oder Gemüsebasis oder eine Kombination davon umfasst und wobei die fettfreien Feststoffe fettfreie Feststoffe umfassen, die ausgewählt sind aus der Gruppe bestehend aus Saccharose oder Zucker, Glukose, Fructose, Maltose, Glukosesirup, Fasern, Protein oder Kombinationen davon.

2. Milchfreies gefrorenes Konfekt nach Anspruch 1, wobei ein Teil der fettfreien Feststoffe zu 1 bis 40 Gew.-% Glukosesirup und zu 5 bis 20 Gew.-% Zucker ist.

3. Milchfreies gefrorenes Konfekt nach Anspruch 2, wobei der Glukosesirup in einer Menge von 20 bis 30 Gew.-% vorhanden ist.

4. Milchfreies gefrorenes Konfekt nach einem der vorstehenden Ansprüche, wobei das gefrorene Konfekt einen Feststoffgehalt von 25 bis 50 %, bezogen auf das Gewicht der gesamten gefrorenen Zusammensetzung, aufweist.

5. Milchfreies gefrorenes Konfekt nach einem der vorstehenden Ansprüche, wobei der Frucht- oder Gemüsestabilisator vorzugsweise in einer Menge von 0 bis 0,5 Gew.-% vorhanden ist.

6. Milchfreies gefrorenes Konfekt nach einem der vorstehenden Ansprüche, wobei der Frucht- oder Gemüsestabilisator Pektin ist.

7. Milchfreies gefrorenes Konfekt nach einem der Ansprüche 1 bis 5, wobei das gefrorene Konfekt kakaobasierte Zutaten umfasst und frei von Stabilisatoren auf pflanzlicher Basis ist.

8. Milchfreies gefrorenes Konfekt nach einem der vorstehenden Ansprüche, wobei der Glukosesirup Maissirup, vorzugsweise ein Maissirup mit einem Wert im Bereich von 24DE bis 42DE oder eine Kombination solcher Maissirupe, mehr bevorzugt ein Maissirup mit 26DE, ist.

9. Milchfreies gefrorenes Konfekt nach einem der vorstehenden Ansprüche mit einem Lufteinschlag von 22 bis 50 %, vorzugsweise von 25 bis 40 %.

10. Milchfreies gefrorenes Konfekt nach einem der vorstehenden Ansprüche, wobei die Kokoscreme einen Fettgehalt von 20 bis 30 Gew.-% aufweist.

11. Milchfreies gefrorenes Konfekt nach einem der vorstehenden Ansprüche, wobei die Kokoscreme einen Gesamtfeststoffgehalt von 28 bis 32 Gew.-% aufweist.

12. Milchfreies gefrorenes Konfekt nach einem der vorstehenden Ansprüche, wobei das gefrorene Konfekt aus Kokoscreme, Glukosesirup, Zucker, Pektin und Wasser besteht.

13. Milchfreies gefrorenes Konfekt nach den Ansprüchen 1 bis 11, wobei das gefrorene Konfekt aus Kokoscreme, Glukosesirup, Zucker Kakaopulver und Wasser besteht.

14. Milchfreies gefrorenes Konfekt nach einem der vorstehenden Ansprüche, wobei das gefrorene Konfekt zu 0,1 und 2,0 Gew.-% Protein umfasst.

15. Verfahren zur Herstellung eines milchfreien gefrorenen Konfekts nach einem der vorstehenden Ansprüche, das folgende Schritte umfasst:
das Mischen der Kokoscreme, Süßstoffe, kakaobasierten Zutaten mit Wasser in einem Tank, um eine milchfreie Mischung zu erhalten,
das Wärmebehandeln der Mischung zum Abtöten von Krankheitserregern und Schmelzen des Fetts
das Homogenisieren der Mischung zum Abbauen und Stabilisieren von Fettkügelchen,
das Kühlen der Mischung zum Verfestigen von Fett und Verdicken der Mischung,
wahlweise das Aromatisieren der Mischung nach Geschmack
das Einfrieren unter Einbeziehung von Luft,
das Verpacken der gefrorenen Mischung und
das Aushärten des Produkts in einem Gefrierschrank.

## Revendications

1. Confiserie congelée non laitière comprenant
30 à 60 % en poids de crème de noix de coco sur la base du poids total de la confiserie congelée, 20 à 30 % en poids de la crème de noix de coco étant de la matière grasse et la crème de noix de coco ayant une teneur totale en matières solides de 25 à 40 %, 15 à 40 % en poids de matières solides exemptes de matières grasses et de l'eau, et
étant exempte d'agents stabilisants ou comprend en guise de seul agent stabilisant un agent stabilisant à base de fruits ou de légumes ou une combinaison de ceux-ci, et dans laquelle les matières solides exemptes de matières grasses comprennent des matières solides exemptes de matières grasses choisies dans le groupe constitué de saccharose ou sucre, glucose, fructose, maltose, sirop de glucose, fibres, protéine ou des combinaisons de ceux-ci.

2. Confiserie congelée non laitière selon la revendication 1, dans laquelle une partie des matières solides exemptes de matières grasses sont 1 à 40 % en poids de sirop de glucose et 5 à 20 % en poids de sucre.

3. Confiserie congelée non laitière selon la revendication 2, dans laquelle le sirop de glucose est présent en une quantité de 20 à 30 % en poids.

4. Confiserie congelée non laitière selon l'une quelconque des revendications précédentes, dans laquelle la confiserie congelée a une teneur en matières solides de 25 à 50 % sur la base du poids de la composition congelée totale.

5. Confiserie congelée non laitière selon l'une quelconque des revendications précédentes, dans laquelle l'agent stabilisant à base de fruits ou de légumes est de préférence présent en une quantité de 0 à 0,5 % en poids.

6. Confiserie congelée non laitière selon l'une quelconque des revendications précédentes, dans laquelle l'agent stabilisant à base de fruits ou de légumes est de la pectine.

7. Confiserie congelée non laitière selon l'une quelconque des revendications 1 à 5, dans laquelle la confiserie congelée comprend des ingrédients dérivés de cacao et est exempte d'agent stabilisant à base de légumes.

8. Confiserie congelée non laitière selon l'une quelconque des revendications précédentes, dans laquelle le sirop de glucose est du sirop de maïs, de préférence un sirop de maïs avec des sirops de maïs dans la plage de 24DE à 42DE ou une combinaison de ceux-ci, plus préférablement un sirop de maïs avec 26DE.

9. Confiserie congelée non laitière selon l'une quelconque des revendications précédentes, ayant un foisonnement qui va de 22 à 50 %, de préférence 25 à 40 %.

10. Confiserie congelée non laitière selon l'une quelconque des revendications précédentes, dans laquelle la crème de noix de coco a une teneur en matières grasses allant de 20 à 30 % en poids.

11. Confiserie congelée non laitière selon l'une quelconque des revendications précédentes, dans laquelle la crème de noix de coco a une teneur totale en matières solides de 28 à 32 %.

12. Confiserie congelée non laitière selon l'une quelconque des revendications précédentes, dans laquelle la confiserie congelée est constituée de crème de noix de coco, de sirop de glucose, de sucre, de pectine et d'eau.

13. Confiserie congelée non laitière selon les revendications 1 à 11, dans laquelle la confiserie congelée est constituée de crème de noix de coco, de sirop de glucose, de poudre de cacao de sucre et d'eau.

14. Confiserie congelée non laitière selon l'une quelconque des revendications précédentes, dans laquelle la confiserie congelée comprend 0,1 et 2,0 % en poids de protéine.

15. Procédé de fabrication d'une confiserie congelée non laitière selon l'une quelconque des revendications précédentes, comprenant les étapes suivantes :
mélange de la crème de noix de coco, d'édulcorants, d'ingrédients dérivés de cacao avec de l'eau dans une cuve pour obtenir un mélange non laitier,
traitement thermique du mélange pour détruire les agents pathogènes et fondre la matière grasse,
homogénéisation du mélange pour désintégrer et stabiliser les globules de matière grasse,
refroidissement du mélange pour solidifier la matière grasse et épaissir le mélange,
éventuellement aromatisation du mélange pour convenir au goût,
congélation en incorporant de l'air,
emballage du mélange congelé, et
durcissement du produit dans un congélateur.
